(19) Europäisches Patentamt
European Patent Office
Office européen des brevets

(11) EP 2 295 761 B1

(12) # EUROPEAN PATENT SPECIFICATION

(45) Date of publication and mention of the grant of the patent:
**24.10.2012 Bulletin 2012/43**

(51) Int Cl.:
***F02B 37/12** (2006.01)*

(21) Application number: **09168895.2**

(22) Date of filing: **28.08.2009**

(54) **Method of and apparatus for monitoring the operation of an internal combustion engine**

Verfahren und Vorrichtung zum Überwachen des Betriebs eines Verbrennungsmotors

Appareil de capture d'images à l'état solide et système de capture d'images

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(43) Date of publication of application:
**16.03.2011 Bulletin 2011/11**

(73) Proprietor: **Ford Global Technologies, LLC**
**Dearborn, MI 48126 (US)**

(72) Inventor: **Petrovic, Simon**
**6227 TV Maastricht (NL)**

(74) Representative: **Drömer, Hans-Carsten**
**Henry-Ford Str. 1**
**50725 Köln (DE)**

(56) References cited:
**US-A1- 2004 216 457**
**US-A1- 2007 095 063**
**US-B1- 6 871 498**
**US-B1- 7 089 738**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 295 761 B1

## Description

The present invention concerns a method of and an apparatus for monitoring the operation of an internal combustion engine.

Turbochargers usually operate both in respect of the compressor and also in respect of the turbine in a well-defined working area which can also be referred to as the characteristic map of the turbocharger. Unstable operation of the turbocharger can lead to a reduction in the service life as well as detrimental effects in terms of driving sensation.

An unstable flow occurring in the compressor is referred to as compressor pumping (= surge) and is to be attributed to the fact that the current pressure ratio is excessively high for the currently prevailing mass flow value. The range of compressor pumping or surge is characterised by operation with fluctuations in respect of mass flow and pressure, in respect of which a reversed or negative flow can occur. The surge effect leads to a reduction in the performance and the efficiency of the compressor and markedly audible generation of noise and also mechanical malfunctions ultimately leading to damage to the turbocharger itself, which can also result inter alia in warranty claims.

To reduce surge it is known to introduce calibratable limit curves during engine calibration, which however can lead to an adverse effect on the operating characteristics in the transient mode of operation and in addition is not exact as a consequence of manufacture-induced fluctuations between different hardware components of the turbocharger system.

Conventionally, to determine whether a surge situation is occurring a corrected MAF value (MAF = mass air flow) is ascertained in dependence on a correct PRC value (PRC = pressure ratio compressor). In addition a mass air flow sensor which is common in the automobile industry can be used to detect the onset of a surge situation and to specify the correct frequency range of the oscillations occurring in the surge situation.

In that respect however the problem arises that, in accordance with the Euro 6 standard and beyond, replacement of the MAF sensor is planned by virtue of durability problems, in particular in frequent operation in inner city driving conditions. The result of this is that the MAF value is estimated in other ways, for example by means of turbocharger speed sensors, by way of real-time modelling of the induction manifold or by means of methods based on the use of an oxygen sensor.

A further sensor which is common in the automobile sector is the MAP sensor (= boost pressure sensor) which is normally placed in the intake manifold. The MAP signal is however filtered by the induction manifold, wherein, in the case of an arrangement downstream of the exhaust gas recycling inlet (EGR inlet), the effect is attenuated even more.

While turbocharger speed sensors (abbreviated as: TSS) for avoiding overspeeding of the turbocharger are already established in commercial vehicles, the introduction of such sensors in the mass production of passenger cars is not yet wid e-spread. Besides the capability of estimating engine parameters such as the pressure upstream of the turbine (also referred to as $P_3$), the temperature at the compressor outlet (also referred to as $T_2$), the temperature at the turbine inlet (also referred to as $T_3$) and the mass air flow (also referred to as the MAF value), turbocharger speed sensors are used for implementing advanced turbocharger control and for diagnostic devices such as for example in multi-turbocharger systems in which damage to a turbine shut-off valve can be detected by way of the secondary turbocharger speed measurement.

US 2004/0216457 A1 discloses an apparatus and method for automatic detection and avoidance of turbocharger surge on locomotive diesel engines, wherein in one embodiment a predetermined amount of change in the turbocharger speed is measured over a predefined period of time. The engine control system increases the speed of the engine when the existence of a surge in the compressor is indicated, e.g. for a change in the turbocharger speed of 200 rpm over a period of one second.

US 7,089,738 B1 discloses a system for controlling turbocharger compressor surge, wherein a mass flow rate surge value is determined as a function of a speed signal indicative of turbocharger speed, and wherein the EGR valve position and VGT position are limited as a function of the mass flow rate surge value to maintain exhaust gas flow through the EGR valve at a flow rate below which turbocharger compressor surge is avoided.

Having regarded to the foregoing background a problem of the present invention is to provide a method and an apparatus for monitoring the operation of an internal combustion engine, which permit quick reliable detection of compressor surge.

That problem is solved by the method comprising the features of independent claim 1 and the apparatus comprising the features of claim 6.

A method according to the invention of monitoring the operation of an internal combustion engine, wherein the internal combustion engine has a turbocharger with a compressor, has the following steps: Ascertaining at least one turbocharger speed signal and calculating a characteristic based on the turbocharger speed signal, wherein the existence of a surge of the compressor is established on the basis of said characteristic, wherein calculation of a characteristic based on the turbocharger speed signal is effected on the basis of the relationship

$$\frac{J}{2}\frac{d\omega^2}{dt} = P_t - P_c$$

wherein $\omega$ denotes the turbocharger speed, $P_t$ is the turbine power, $P_c$ denotes the compressor power and J denotes the moment of inertia of the whole turbocharger.

The invention is based in particular on the concept of using a turbocharger speed sensor to define a characteristic based on the turbocharger speed signal and which in turn can serve as a direct measurement for existing or incipient surge of the compressor. The invention is therefore based in particular on the realisation that compressor surge represents a further property which can be diagnosed by means of the turbocharger speed. As the outcome, the method and the apparatus according to the invention permit more reliable and faster detection of compressor surge. According to an embodiment the method further includes the following steps: ascertaining N sample values for the turbocharger speed (TSS value) and calculating the value $J/2\cdot(d\omega^2/dt)$ for said sample values. The N sample values can be subjected in particular to a Fourier transform.

In accordance with an embodiment compressor surge is assumed to be "active" if the characteristic based on the turbocharger speed signal exceeds a (preferably) calibratable threshold value for a time period (which is preferably also calibratable).

In accordance with the invention on the one hand pure monitoring (without implementation of corrective measures) in regard to existing or incipient compressor surge can be effected.

In accordance with a further aspect, based on the monitoring according to the invention, active control can also be provided to the effect that suitable corrective measures are taken in the event of detection of compressor surge. In particular the reference value for the boost pressure can be reduced when compressor surge is detected.

The invention further concerns an apparatus for monitoring the operation of an internal combustion engine. Regarding advantages and preferred configurations of the apparatus attention is directed to the foregoing description relating to the method.

Further configurations of the invention are to be found in the description and the appendant claims.

The invention is described in greater detail hereinafter by means of a preferred embodiment by way of example and with reference to the accompanying drawings in which:

Figure 1 shows a typical characteristic map of a compressor, in which the pressure ratio is plotted in dependence on the reduced mass flow rate; and

Figure 2 shows a flow chart for describing a method in accordance with an embodiment of the invention.

The following values or abbreviations are used hereinafter:

| | |
|---|---|
| $T_c$ | compressor torque |
| $T_t$ | turbine torque |
| $P_c$ | compressor power |
| $P_t$ | turbine power |
| J | moment of inertia of the whole turbocharger (including turbine, compressor and shaft) |
| $\omega$ (also: TSS value) | turbocharger speed |

Hereinafter firstly the underlying mathematical equations of the present invention will be developed:

The following applies for the relationship between the turbocharger speed, the compressor torque and the turbine torque:

$$J\frac{d\omega}{dt} = T_t - T_c \qquad (1)$$

The following follows therefrom:

$$\omega * J\frac{d\omega}{dt} = \omega * (T_t - T_c) \qquad (2)$$

Upon replacement of the torque $T_t$, $T_c$ of turbine and compressor respectively by the respective power equation (2) gives the following:

$$\frac{J}{2}\frac{d\omega^2}{dt} = P_t - P_c \qquad (3)$$

Figure 1 shows a typical characteristic compressor map in which the pressure ratio is plotted in dependence on the reduced mass flow rate (in $m^3/s$). In that respect the efficiency in the normal operating range is well-defined.

In accordance with the flow chart show shown in Figure 2 signal processing and filtering of a raw signal 205 is firstly effected in suitable hardware 210 in order to ascertain a suitable measurement value in respect of the turbocharger speed sensor signal 215 (for brevity: TSS signal) in revolutions per minute (= rpm).

The algorithm according to the invention is implemented by following blocks 220-240.

In that respect, block 220 firstly involves calculation of the value $J/^2(d\omega^2/dt)$ which in accordance with equation (3) corresponds to the difference between turbine power and compressor power and can thus serve to ascertain a characteristic value for the onset of compressor surge.

In a subsequent signal processing block 230 N sample values for the turbocharger speed (TSS value) are put into intermediate storage in accordance with the illustrated embodiment. Then a Fourier transform is performed for those values (function block 231). The value $J/2(d\omega^2/dt)$ is then calculated therefrom in the frequency range or interval $[f_1, f_2]$.

Depending on the respective application or hardware environment, signal intermediate storage and/or a fast Fourier transform cannot be implemented. In that case it is alternatively also possible to ascertain directly the power difference in the range between the frequencies $f_1$ and $f_2$ (that is to say the range in which compressor surge occurs), in which case that difference can then be filtered.

The signal power calculated in the signal processing block 230 is fed to a function block 240 for the monitor algorithm. Here to detect the presence of compressor surge a characteristic value $M[f_1, f_2]$ in the interval $[f_1, f_2]$ can be ascertained as follows in a block 241:

- as a statistical mean of the value $J/2(d\omega^2/dt)$ for the sample values in the interval $[f_1, f_2]$,
- based on the statistical standard deviation of the value $J/2(d\omega^2/dt)$ in the interval $[f_1, f_2]$, or
- based on the absolute amount of the value $J/2(d\omega^2/dt)$ in the interval $[f_1, f_2]$.

A further block 242 involves ascertaining whether the characteristic value exceeds a predetermined limit value, that is to say whether the condition $M[f_1, f_2] > M_{thresh}$ is met. If that is the case a direct flag character 245 or a message about the existence of compressor surge is produced and firstly subjected to checking in a fault diagnosis unit 250.

The direct flag character 245 is still held or checked for a calibratable period of time for avoidance purposes in the fault diagnosis unit 250 to avoid false readings and is finally output as a confirmed flag character 255 or confirmed message concerning the existence of compressor surge.

Overall the method and the apparatus according to the invention permit faster and more reliable detection of compressor surge.

## Claims

1. A method of monitoring the operation of an internal combustion engine, wherein the internal combustion engine has a turbocharger with a compressor, wherein the method has the following steps:

   ascertaining at least one turbocharger speed signal; and
   calculating a characteristic based on the turbocharger speed signal,
   wherein the existence of a surge of the compressor is established on the basis of said characteristic,
   **characterised in that**

calculation of a characteristic based on the turbocharger speed signal is effected on the basis of the relationship

$$\frac{J}{2}\frac{d\omega^2}{dt} = P_t - P_c$$

including the steps

- ascertaining N sample values for the turbocharger speed; and
- calculating the value J/2·($d\omega^2$/dt) for said sample values;

wherein $\omega$ denotes the turbocharger speed, $P_t$ is the turbine power, $P_c$ denotes the compressor power and J denotes the moment of inertia of the whole turbocharger.

**2.** A method according to claim 1,
**characterised in that**
for the case where compressor surge is detected a suitable corrective measure is taken to reduce the compressor surge.

**3.** A method according to claim 1 or claim 2,
**characterised in that**
compressor surge is detected if said characteristic exceeds a predetermined threshold value for a predetermined period of time.

**4.** A method according to anyone of the claims 1-3,
**characterised in that**
the N sample values are subjected to a Fourier transform.

**5.** Apparatus for monitoring the operation of an internal combustion engine, wherein the internal combustion engine has a turbocharger with a compressor,
**characterised in that**
the apparatus is adapted to carry out a method according to one of the claims 1-4.

**Patentansprüche**

**1.** Verfahren zum Überwachen des Betriebs eines Verbrennungsmotors, wobei der Verbrennungsmotor einen Turbolader mit einem Verdichter hat, wobei das Verfahren die folgenden Schritte aufweist:

Bestimmen mindestens eines Turboladergeschwindigkeitssignals und
Berechnen einer Charakteristik basierend auf dem Turboladergeschwindigkeitssignal,
wobei die Existenz eines Pumpens des Verdichters auf der Grundlage der Charakteristik erstellt wird,
**dadurch gekennzeichnet, dass**
die Berechnung einer Charakteristik basierend auf dem Turboladergeschwindigkeitssignal ausgeführt wird auf der Basis der Beziehung

$$\frac{J}{2}\frac{d\omega^2}{dt}) = P_t - P_c$$

umfassend die folgenden Schritte:

- Bestimmen von N Stichprobenwerten für die Turboladergeschwindigkeit und
- Berechnen des Werts J/2($d\omega^2$/dt) für die Stichprobenwerte;

wobei $\omega$ die Turboladergeschwindigkeit, $P_t$ die Turbinenleistung, $P_c$ die Verdichterleistung und J das Trägheitsmoment des gesamten Turboladers ist.

**2.** Verfahren nach Anspruch 1,
**dadurch gekennzeichnet, dass**
in dem Fall, in dem das Pumpen des Verdichters erfasst wird, eine passende behebende Maßnahme getroffen wird, um das Pumpen des Verdichters zu verringern.

**3.** Verfahren nach Anspruch 1 oder 2,
**dadurch gekennzeichnet, dass**
das Pumpen des Verdichters erfasst wird, wenn das Merkmal einen vorbestimmten Schwellenwert während einer vorbestimmten Zeitspanne überschreitet.

**4.** Verfahren nach einem der Ansprüche 1 bis 3,
**dadurch gekennzeichnet, dass**
die N Stichprobenwerte einer Fourier Transformation unterzogen werden.

**5.** Vorrichtung zum Überwachen des Betriebs eines Verbrennungsmotors, wobei der Verbrennungsmotor einen Turbolader mit einem Verdichter hat,
**dadurch gekennzeichnet, dass**
die Vorrichtung geeignet ist, um ein Verfahren nach einem der Ansprüche 1 bis 4 auszuführen.

## Revendications

**1.** Procédé de surveillance du fonctionnement d'un moteur à combustion interne, lequel moteur à combustion interne comprend un turbocompresseur équipé d'un compresseur, le procédé comprenant les étapes suivantes :

la détermination d'au moins un signal de vitesse du turbocompresseur ; et
le calcul d'une caractéristique à partir du signal de vitesse du turbocompresseur,
l'existence d'un pompage du compresseur étant établie à partir de ladite caractéristique,
le procédé étant **caractérisé en ce que**
le calcul d'une caractéristique à partir du signal de vitesse du turbocompresseur s'effectue à partir de la relation

$$\frac{J}{2}\frac{d\omega^2}{dt} = P_t - P_c$$

et comprend les étapes suivantes

- la détermination de N valeurs d'échantillonnage pour la vitesse du turbocompresseur ; et
- le calcul de la valeur J/2 ($d\omega^2/dt$) pour lesdites valeurs d'échantillonnage ;

$\omega$ désignant la vitesse du turbocompresseur, $P_t$ la puissance de la turbine, $P_c$ la puissance du compresseur et J le moment d'inertie de l'ensemble du turbocompresseur.

**2.** Procédé selon la revendication 1,
**caractérisé en ce que**
en cas de détection d'un pompage du compresseur, une mesure corrective est adoptée dans le but de réduire le pompage du compresseur.

**3.** Procédé selon la revendication 1 ou la revendication 2,
**caractérisé en ce que**
un pompage du compresseur est détecté si ladite caractéristique dépasse une valeur limite prédéfinie pendant une période de temps prédéfinie.

**4.** Procédé selon l'une quelconque des revendications 1 à 3,

**caractérisé en ce que**
les N valeurs d'échantillonnage sont soumises à une transformation de Fourier.

5. Appareil de surveillance du fonctionnement d'un moteur à combustion interne, lequel moteur à combustion interne comprend un turbocompresseur équipé d'un compresseur,
l'appareil étant **caractérisé en ce que**
il est adapté à mettre en oeuvre un procédé selon l'une des revendications 1 à 4.

Fig. 1

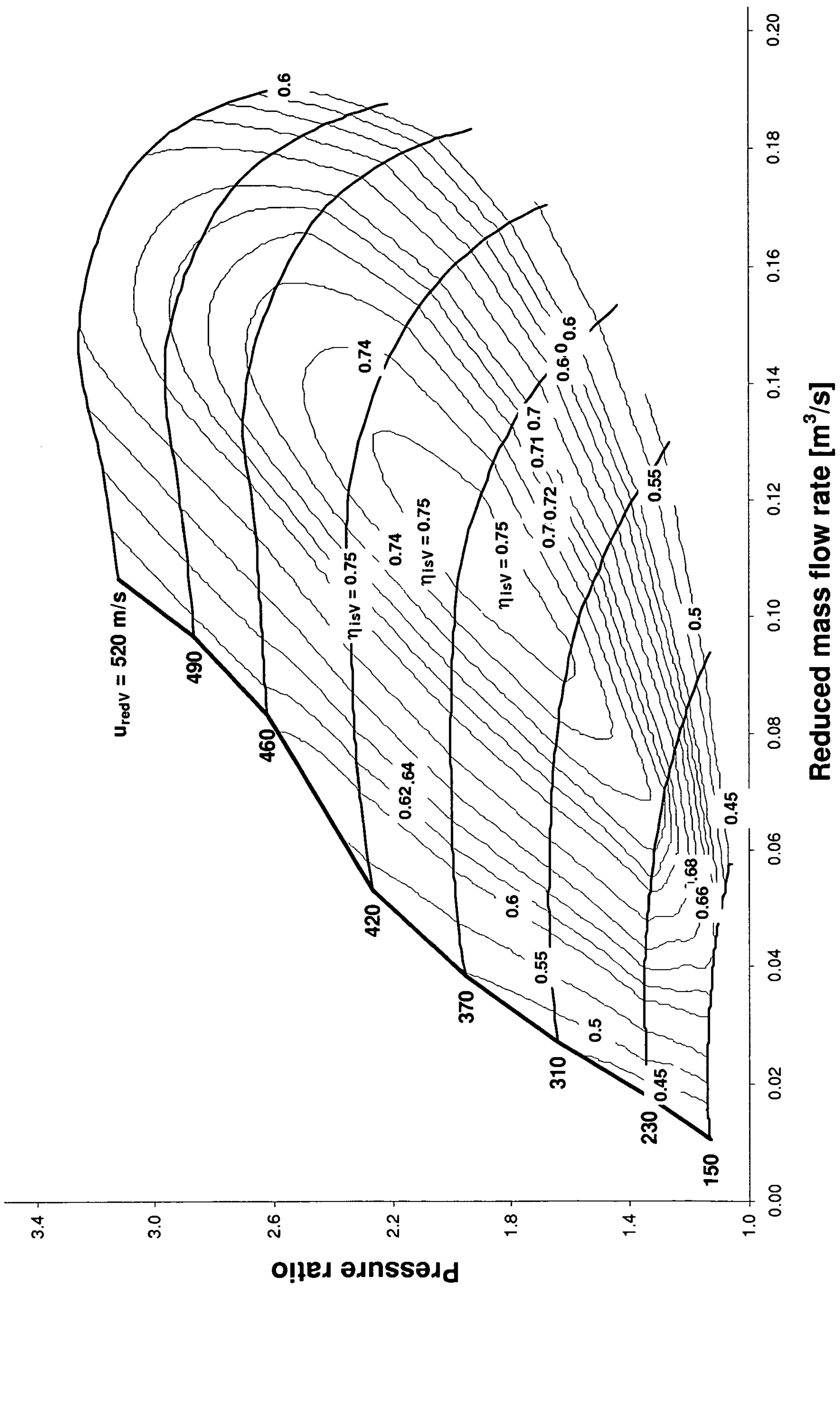
Pressure ratio
Reduced mass flow rate [m³/s]
u_redV = 520 m/s
490
460
420
370
310
230
150
η_isV = 0.75
0.74
0.6
0.55
0.5
0.45
0.66
0.68
0.62
0.64
0.7
0.71
0.72
0.00
0.02
0.04
0.06
0.08
0.10
0.12
0.14
0.16
0.18
0.20
1.0
1.4
1.8
2.2
2.6
3.0
3.4

Fig. 2

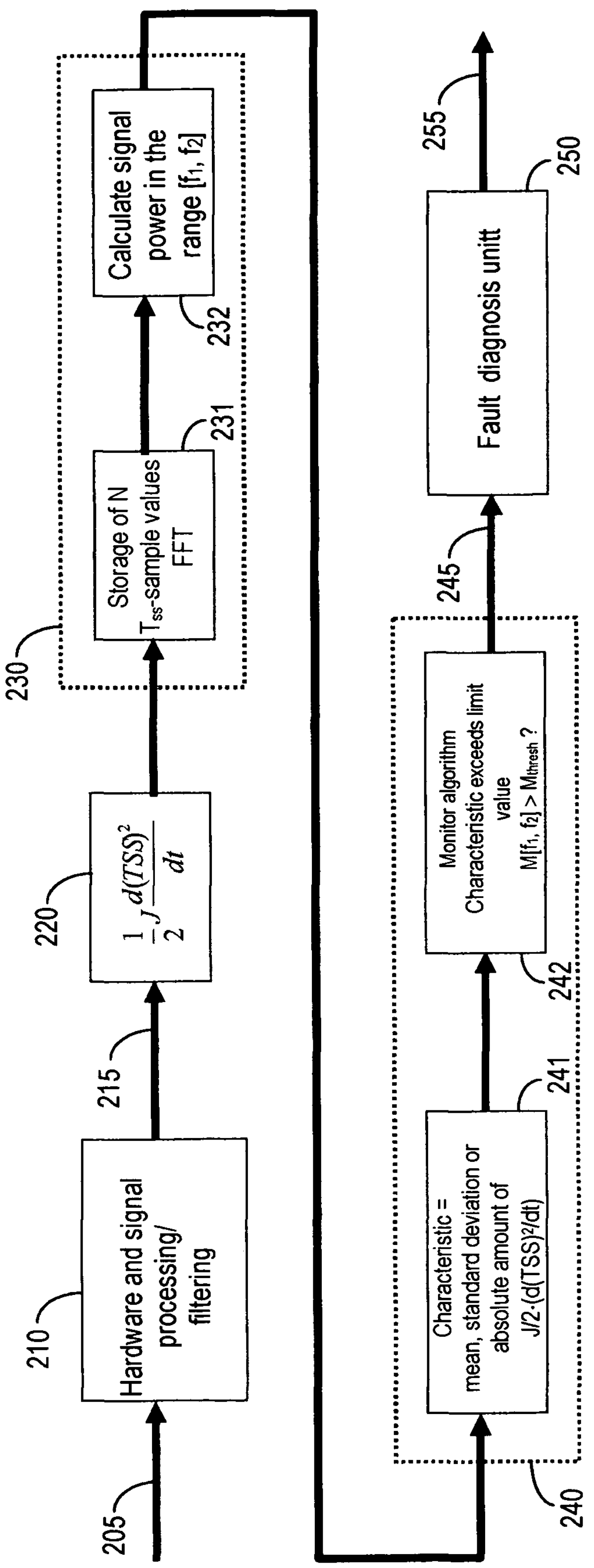
205
210
Hardware and signal processing/ filtering
215
220
$\frac{1}{2}J\frac{d(TSS)^2}{dt}$
230
Storage of N $T_{ss}$-sample values FFT
231
Calculate signal power in the range [$f_1$, $f_2$]
232
240
Characteristic = mean, standard deviation or absolute amount of $J/2 \cdot (d(TSS)^2/dt)$
241
Monitor algorithm Characteristic exceeds limit value $M[f_1, f_2] > M_{thresh}$ ?
242
245
Fault diagnosis unitt
250
255

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 20040216457 A1
- US 7089738 B1